# EUROPEAN PATENT APPLICATION

(11) **EP 0 827 992 A1**
(43) Date of publication of application: **11.03.1998**
(21) Application number: 97115347.3
(22) Date of filing: 04.09.1997
(51) Int. Cl.: C09D 11/02

(54) **Emulsion ink for stencil printing**

(30) Priority: 07.09.1996 JP 257568/96
(71) Applicant: Riso Kagaku Corporation, Tokyo 105 (JP)
(72) Inventor: Suzuki, Takashi, Riso Kagaku Corporation, Inashiki-gun, Ibaraki-ken 300-03 (JP); Ishikawa, Masato, Riso Kagaku Corporation, Inashiki-gun, Ibaraki-ken 300-03 (JP); Hayashi, Yoshihiro, Riso Kagaku Corporation, Inashiki-gun, Ibaraki-ken 300-03 (JP); Okuda, Sadanao, Riso Kagaku Corporation, Inashiki-gun, Ibaraki-ken 300-03 (JP)
(74) Representative: WILHELMS, KILIAN & PARTNER Patentanwälte

(57) **Abstract**

A water-in-oil (W/O) emulsion ink for stencil printing is provided, which contains water-insoluble colorants in the water phase thereof, is high in printing density, and is highly prevented from seep through and blurring. The oil phase of the W/O emulsion ink has a viscosity of 5 cps or higher, preferably 15 cps or higher at 23 °C. Preferably, blending ratio of the oil phase to the water phase (the oil phase/the water phase) is 10 to 70/90 to 30 on weight basis.

## Description

The present invention relates to an emulsion ink for stencil printing, and more specifically relates to an emulsion ink which contains a water-insoluble colorant in the water phase thereof and is high in printing density and low in blurring and seep through.

Stencil printing is effected by perforating a stencil sheet to make a master, and passing inks through the perforated portions of the master to an article to be printed such as printing paper. Since the master is easy to make, stencil printing is utilized in a wide range of fields.

Conventional emulsion inks for stencil printing are usually water-in-oil (W/O) emulsion inks which contain pigments as colorants in the oil phase thereof, as disclosed in Japanese Patent Laid-open (Kokai) Nos. 255967/86, 14284/89, 132777/92 and 117565/93. Once this type of W/O emulsion inks are printed on an article such as printing paper to be printed, the oil phase, which is the outer phase of emulsion, first permeates the printed article, and then the water phase, which is the inner phase of emulsion, permeates the printed article and/or evaporates therefrom. Since the conventional W/O emulsion inks contain pigments in the oil phase, the inks are low in permeation speed. In addition, permeation of pigments contained in the oil phase occurs concurrently with the permeation of the oil phase, and as a result, the inks often have a problem on seep through because pigments deeply permeate into the printed article. Similarly, this phenomenon of permeation occurs on a surface of paper, causing inks to spread on the surface of the paper and blurring the printing.

In order to overcome such disadvantages as mentioned above, a W/O emulsion ink has been suggested, which contains a water-insoluble colorant in the water phase thereof, as disclosed in Japanese Patent Laid-open (Kokai) No. 188598/95. In this case, since the water-insoluble colorant is contained in the water phase, printing density is enhanced, but blurring or seep through sometimes occur depending upon formulation of ink.

It is an object of the present invention to overcome the above-mentioned problems of prior art, and provide a water-in-oil (W/O) emulsion ink for stencil printing, which contains a water-insoluble colorant in the water phase thereof and which is high in printing density and highly prevented from causing blurring and seep through.

According to the present invention, the above object is attained by a water-in-oil (W/O) emulsion ink for stencil printing, having an oil phase and a water phase, in which water insoluble colorants are contained in the water phase, and the oil phase has a viscosity of 5 cps or higher at 23°C.

In other words, according to the present invention, it has been found that prints high in printing density and low in blurring and seep through are provided by use of a water-in-oil (W/O) emulsion ink the water phase of which contains a water-insoluble colorant and the oil phase of which is adjusted to have a viscosity of over a predetermined value.

In conventional water-in-oil (W/O) emulsion inks, colorants are contained in the oil phase which is a continuous phase. Thus, particles of colorants are easy to aggregate with each other in the oil phase. Once they aggregate, the oil phase becomes as if it were increased in viscosity. However, this aggregation is broken to become flowable in the printing machine, and thus when printing is practiced, the ink is lowered in viscosity too much and often leaks out of a junction part of the printing drum or an end of stencil sheet. Further, the ink that has been transferred and printed on printing paper turns viscous again due to thixotropy caused by the aggregation of particles, and thus is lowered in permeation speed and takes much time to permeation and dry. This aggregation varies depending upon variation of properties of colorants resulting from kinds or lots of production, and thus various adjustments of viscosity are required depending upon kinds of colorants.

Since the present emulsion ink contains water-insoluble colorants in the water phase which is a dispersed phase, viscosity of the oil phase adjusted according to the present invention is kept stable regardless of kinds of colorants and whether the ink is left or used in printing.

In the present invention, the oil phase preferably has a viscosity of 5 cps or higher, more preferably 15 cps or higher at 23°C. When the viscosity is lower than 5 cps, the emulsion ink also becomes too low in viscosity, causing much blurring, and in this case little effect is expected from water-insoluble colorants contained in the water phase. On the other hand, it is desired that the oil phase of the present ink has a viscosity at 23°C of 20,000 cps or lower, preferably 2,000 cps or lower, most preferably 1,600 cps or lower. When the viscosity is higher than 20,000 cps, the ink lacks fluidity and is no longer suitable for stencil printing because it can hardly pass through perforated portions of stencil sheets and cannot provide sufficient printing density.

In the present emulsion ink, the oil phase, namely the outer phase, is appropriately greater in permeability and lower in surface tension than the water phase, and thus the oil phase permeates into an article to be printed earlier than the water phase, and then the water phase permeates and/or evaporates. Since the water phase can hardly permeate into the inside of the article into which the oil phase has permeated, the water phase remains on the surface of the article and is dried thereon. As a result, printing density is improved, and seep through, blurring and the like are prevented. While conventional emulsion inks containing water-insoluble colorants in the oil phase were low in permeation speed of the oil phase and took much time to permeate and dry, the present emulsion ink is fast in permeation of the oil phase and thus improved in drying.

In the present emulsion ink, the oil phase basically comprises a solvent to which an emulsifier is added. As a solvent, may be used a non-volatile solvent and/or a volatile solvent. As the non-volatile solvent, can be used mineral oils such as motor oils, spindle oils, machine oils and liquid paraffin, and vegetable oils such as olive oil, castor oil and salad oils. As the volatile solvent, can be used known solvents of the types of mineral oils and vegetable oils. The oil phase of the above viscosity can be prepared by using one or more selected from the above solvents. Proportion of non-volatile solvent to volatile solvent (i.e., non-volatile solvent/volatile solvent) varies depending upon a desired viscosity of the oil phase as well as blending ratio of the oil phase and the water phase, but can generally be 0 - 90/100 - 10 on weight basis.

The emulsifier is used to form the W/O emulsion, and is preferably a nonionic surfactant. As such a nonionic surfactant, mention may be made of sorbitan higher-fatty acid esters such as sorbitan monolaurate, sorbitan monopalmitate, sorbitan monostearate, sorbitan tristearate, sorbitan monooleate and sorbitan sesquioleate as well as fatty acid monoglycerides such as oleic acid monoglyceride, fatty acid diglycerides such as oleic acid diglyceride, and ethylene oxide adducts of higher alcohols, alkylphenols, fatty acids or the like. It is desired that the emulsifier is properly selected so that the W/O emulsion of ink is not destroyed by surfactants that may be contained to disperse water-soluble colorants or form O/W emulsions of resin in the water phase of the present ink.

In the present emulsion ink, the water phase basically comprises water and a water-insoluble colorant dispersed in water. The water-insoluble colorant used in the present invention is not specifically limited, but may be a known pigment and the like. Preferably, the water-insoluble colorant is one which is excellent in affinity with the primary solvent, i.e., water. Examples of the water-insoluble colorant for use in monochrome inks are carbon blacks such as furnace carbon black, lampblack, acetylene black and channel black, metals and metal oxides such as copper, iron, titanium oxide and calcium carbonate, and organic colorants such as ortho-nitroaniline black. Examples of the water-insoluble colorant for use in color inks are cyanine pigments such as phthalocyanine blue, and azo pigments such as soluble or insoluble azo pigments as well as organic pigments such as lake pigments, dioxazines, isoindolinone, quinacridone, and other various colorants commonly used.

Average particle size of the water-insoluble colorant is preferably 10 µm or less, more preferably 3 µm or less, and most preferably 0.5 µm or less. When the average particle size exceeds 10 µm, the W/O emulsion of the ink tends to be destructed. Addition amount of the water-insoluble colorant is preferably 1 - 30 % by weight, more preferably 3 - 10 % by weight based on the total of the emulsion ink.

In the present invention, the water phase may further comprise an oil-in-water (O/W) emulsion of resin and/or a water soluble resin. By adding these components to the water phase, fixation of the water-insoluble colorant to articles to be printed such as paper can be improved.

Examples of the O/W emulsion of resin include emulsions of resins such as polyvinyl acetate, copolymers of ethylene and vinyl acetate, copolymers of vinyl acetate and acrylic acid esters, polymethacrylic acid esters, polystyrene, copolymers of styrene and acrylic acid esters, styrene-butadiene copolymers, copolymers of vinylidene chloride and acrylic acid esters, polyvinyl chloride, copolymers of vinyl chloride and vinyl acetate, and polyurethane.

Examples of the water soluble resin include polyvinyl alcohol, methyl cellulose, carboxymethyl cellulose, hydroxyethyl cellulose, polyvinyl pyrrolidone, copolymers of polyethylene and polyvinyl alcohol, polyethylene oxide, polyvinyl ether, polyacrylamide, gum arabic, starch, and water-soluble polyurethane.

Addition amount of the O/W emulsion of resin and/or the water-soluble resin is preferably 1 to 20 % by weight, more preferably 2 to 10 % by weight as solid content based on the total weight of the ink. If it is less than 1 % by weight, colorants contained in the water phase is not sufficiently fixed to articles to be printed. If it exceeds 20 % by weight, inks form a film on perforations of a stencil sheet and become difficult to pass the perforations when inks are left on the stencil sheet for a long time.

Further, the water phase may contain, as dispersants, ionic surfactants, amphoteric surfactants, nonionic surfactants, polymeric, silicone-containing or fluorochemical surfactants, or such tertiary amine compounds as disclosed in Japanese Patent Laid-open (Kokai) No. 34944/96 corresponding to US Patent No. 5,609,670, or such acid anhydride containing water-soluble polymers as disclosed in Japanese Patent Application No. 177518/96 corresponding to US application filed June 16, 1997, in order to improve wetting, dispersion and the like of the water-insoluble colorant in water. The disclosures of these US applications are incorporated herein by reference.

Among these dispersants, tertiary amine compounds and acid anhydride containing water-soluble polymers are particularly preferred. By employing these compounds as a dispersant, the water-insoluble colorant can finely and stably be dispersed in water, highly-improved images can be provided by virtue of the fine dispersion of the water-insoluble colorant, and a W/O emulsion ink excellent in emulsion stability can be obtained. When ordinary dispersants which are polymer compounds containing in molecule such functional groups as carboxyl or sulfonic acid groups that adsorb the surface of pigments, are used, the emulsion sometimes tends to be destructed. This is because such polymer compounds would also adsorb the interface between the oil phase and the water phase to deteriorate stability of the emulsion.

The tertiary amine compound includes polymer compounds such as polyvinyl pyrrolidone, polyethyleneimine, alkylolamine salts, and poly-N-acryloylpyrrolidine. The acid anhydride containing water-soluble polymer includes, for example, acid anhydride containing olefin copolymers, acid anhydride containing vinyl copolymers, and salts and esters thereof. The acid anhydride containing olefin copolymers include copolymers of olefins such as ethylene and isobutylene with ethylenically unsaturated monomers containing acid anhydrides such as maleic anhydride. The acid anhydride containing vinyl copolymers include copolymers of aromatic vinyl monomers, vinyl ester monomers or vinyl ether monomers with ethylenically unsaturated monomers containing acid anhydrides such as maleic anhydride. As aromatic vinyl monomers, mention may be made of styrene, α-methylstyrene, p-methylstyrene, vinyltoluene, p-butylstyrene, vinylnaphthalene, vinylanthracene, p-arylsulfoxyaminostyrene and p-styrenesulfonic acid and the like. As vinyl ester monomers, mention may be made of vinyl acetate, acrylic acid, acrylic acid ester, methacrylic acid ester and the like. As vinyl ether monomers, mention may be made of methylvinylether and the like. Among them, preferred acid anhydride containing water-soluble polymers are isobutylene-maleic anhydride copolymers, and styrene-maleic anhydride copolymers.

Addition amount of the tertiary amine compound and the acid anhydride containing water-soluble polymer is not specifically limited. Since these components are usually polymers, the more the addition amount is, the greater the thickening effect is. Since dispersants, in such case, only have to be added in a minimum amount to finely and stably disperse the water-insoluble colorant in water, it is preferred that the addition amount is appropriately determined depending upon kinds of dispersants.

As required, the water phase may further contain other water soluble additives such as wetting agents, electrolytes, antifungal agents, antioxidants, water evaporation inhibiting agents and the like.

The present W/O emulsion ink can readily be made, for example, by gradually adding 90 to 30 % by weight of the above mentioned water phase to 10 to 70 % by weight of the above mentioned oil phase and emulsifying the mixture.

### Examples

Hereinafter, the present invention will be explained in more detail by way of presently preferred working examples. However, it should be understood that the present invention is not limited to the examples. In the following examples, the term "part(s)" means "part(s) by weight" unless otherwise indicated.

### Example 1

A W/O emulsion ink was prepared in accordance with the formulation shown in Table 1 and the following procedure. First, ion-exchanged water, magnesium sulfate, ethylene glycol, furnace carbon black and polyvinyl pyrrolidone (Luviskol K17 (trade name) manufactured by BASF) were mixed together and stirred thoroughly, and the components were dispersed using a ball mill to obtain a water phase. Then, an oil phase was prepared by thoroughly mixing #40 motor oil, No.5 solvent manufactured by Nippon Oil Co. Ltd. and sorbitan monooleate under stirring. The water phase was gradually added to the oil phase and emulsified using a stirrer to obtain an emulsion ink for stencil printing.

Meanwhile, viscosity of each oil phase shown in Table 1 was measured at 23 °C by use of a controlled rate rheometer CV-1D manufactured by HAAKE Corp. before the oil phase that had been prepared as above was mixed with the water phase.

### Examples 2 to 3

Emulsion inks for stencil printing were prepared in the same manner as in Example 1 in accordance with the formulations shown in Table 1.

### Comparative Example 1

An emulsion ink for stencil printing was prepared in the same manner as in Example 1 in accordance with the formulation shown in Table 1.

### Comparative Example 2

A W/O emulsion ink was prepared in accordance with the formulation shown in Table 1 and the following procedure. First, an oil phase was prepared by thoroughly mixing alkyd resin, furnace carbon black, #40 motor oil, No.5 solvent manufactured by Nippon Oil Co. Ltd. and sorbitan monooleate, and thoroughly kneading the mixture by use of a three-roll mill. Then, an emulsion ink for stencil printing was obtained by gradually adding a mixed solution of ion-exchanged water, magnesium sulfate and ethylene glycol to the oil phase and emulsifying it by use of a stirrer.

**Table 1**

| Formulations of W/O emulsion inks (parts by weight) | | | | | |
|---|---|---|---|---|---|
| Number of Examples | Ex.1 | Ex.2 | Ex.3 | C.Ex.1 | C.Ex.2 |
| Oil phase: | | | | | |
| Non-volatile solvent: #40 Motor oil | 12.5 | 5.5 | 3.0 | - | 2.0 |
| Volatile solvent: No.5 solvent (manufactured by Nippon Oil Co. Ltd.) | 12.5 | 19.5 | 22.0 | 15.0 | 14.0 |
| Emulsifier: Sorbitan monooleate | 5.0 | 5.0 | 5.0 | 5.0 | 5.0 |
| Resin: Alkyd resin | - | - | - | - | 9.0 |
| Viscosity (cps)^{*1} | 85.0 | 17.2 | 5.4 | 0.75 | 589 |
| Water-insoluble colorant: furnace carbon black | 7.0 | 7.0 | 7.0 | 7.0 | 7.0 |

| Water phase: | | | | | |
|---|---|---|---|---|---|
| Water: ion-exchanged water | 54.5 | 54.5 | 54.5 | 63.5 | 56.0 |
| Dispersant: polyvinyl pyrrolidone | 1.5 | 1.5 | 1.5 | 1.5 | - |
| Electrolyte: magnesium sulfate | 1.0 | 1.0 | 1.0 | 2.0 | 1.0 |
| Wetting agent: ethylene glycol | 6.0 | 6.0 | 6.0 | 6.0 | 6.0 |
| Note: "Ex." refers to Example, and "C.Ex." refers to Comparative Example. | | | | | |

| | | | | | |
|---|---|---|---|---|---|
| *1: Values show viscosity at 1200 l/s. | | | | | |

### Performance tests

Stencil printing was effected by use of a stencil printing apparatus RISOGRAPH (registered trademark) GR375 (manufactured by RISO KAGAKU CORPORATION) with each of the inks prepared in Examples 1 to 3 and Comparative Examples 1 and 2. Printing density, seep through and blurring of prints thus obtained were determined in accordance with the following procedures (1)-(3), and the results are shown in Table 2.
(1) Printing density: Printing density on a solid region of the print was measured using a reflection densitometer RD920 manufactured by Macbeth Corp.
(2) Seep through: Printing density on the side opposite to the solid region of the print was measured by the same reflection densitometer as in (1).
(3) Blurring: Blurring around the ink of the print was observed by use of a microscope of 80 times magnification. When little or no blurring was observed, the result was indicated as (-) in Table 2. When blurring was detected but print was fair, the result was indicated as (+) in Table 2. When blurring was conspicuous, the result was indicated as (++) in Table 2.

**Table 2**

| Results of Examples and Comparative Examples | | | | | |
|---|---|---|---|---|---|
| | Ex. 1 | Ex. 2 | Ex. 3 | C.Ex. 1 | C.Ex. 2 |
| Printing Density | 1.19 | 1.14 | 1.16 | 1.15 | 1.08 |
| Seep through | 0.14 | 0.15 | 0.19 | 0.19 | 0.21 |
| Blurring | (-) | (-) | (+) | (++) | (++) |
| Note: "Ex." refers to Example, and "C.Ex." refers to Comparative Example. | | | | | |

From Table 2, it is understood that Examples 1 to 3 were lower in blurring than Comparative Example 1, and were higher in printing density and lower in seep through and blurring than Comparative Example 2. Particularly, Examples 1 and 2, which were increased in viscosity of the oil phase, were lower in seep through and blurring than Comparative Examples 1 and 2.

The present W/O emulsion ink contains water-insoluble colorants in the water phase thereof, and thus high in printing density. Also, viscosity of the oil phase of the present ink is maintained higher than a predetermined value, and thus the ink is low in seep through and blurring.

## Claims

1. A water-in-oil (W/O) emulsion ink for stencil printing, having an oil phase and a water phase, in which a water-insoluble colorant is contained in said water phase, and said oil phase has a viscosity of 5 cps or higher at 23 °C.

2. An emulsion ink for stencil printing according to claim 1, in which said oil phase has a viscosity of 15 cps or higher at 23 °C.

3. An emulsion ink for stencil printing according to claim 1, in which blending ratio of the oil phase to the water phase (the oil phase/the water phase) is 10 to 70/90 to 30 on weight basis.
